# EUROPÄISCHE PATENTSCHRIFT

(11) **EP 0 548 101 B1**
(45) Veröffentlichungstag und Bekanntmachung des Hinweises auf die Patenterteilung: **29.11.1995**
(21) Anmeldenummer: 91914829.6
(22) Anmeldetag: 27.08.1991
(51) Int. Cl.: G01N 23/223, G01N 1/28

(54) **VERFAHREN UND VORRICHTUNG ZUR ANALYSE UND BESTIMMUNG DER KONZENTRATION VON ELEMENTEN IN VORBESTIMMTEN TIEFEN VON OBJEKTEN**
PROCESS AND DEVICE FOR THE ANALYSIS AND DETERMINATION OF THE CONCENTRATION OF ELEMENTS AT PREDETERMINED DEPTHS IN OBJECTS
PROCEDE ET DISPOSITIF D'ANALYSE ET DE DETERMINATION DE LA CONCENTRATION D'ELEMENTS A DES PROFONDEURS PREDETERMINEES DANS DES OBJETS

(30) Priorität: 05.09.1990 DE 4028044
(43) Veröffentlichungstag der Anmeldung: 30.06.1993
(73) Patentinhaber: GKSS-FORSCHUNGSZENTRUM GEESTHACHT GMBH, D-21502 Geesthacht (DE)
(72) Erfinder: BORMANN, Rüdiger, D-2000 Hamburg 60 (DE); SCHWENKE, Heinrich, D-2058 Escheburg (DE)
(74) Vertreter: Niedmers, Ole, Dipl.-Phys.
(86) Internationale Anmeldenummer: DE9100675
(87) Internationale Veröffentlichungsnummer: WO9204622

(56) Entgegenhaltungen:
- EP-A- 0 265 618
- DE-A- 3 625 700
- DE-A- 3 925 891
- DE-C- 2 363 581
- GB-A- 2 215 909
- US-A- 4 169 228

## Beschreibung

Die Erfindung betrifft ein Verfahren zur Analyse und Bestimmung der Konzentration von Elementen in vorbestimmten Tiefen von im wesentlichen ebenen Objekten mit geringer Rauhigkeit mittels spektroskopischer Methoden, wobei das Objekt äußerlich unter Anwendung eines Zerstäubungs- oder Verdampfungsverfahrens abgetragen wird, sowie eine Vorrichtung zur Ausführung dieses Verfahrens.

Ein Verfahren dieser Art ist bekannt (DE-C-23 63 581). Das Objekt wird bei diesem bekannten Verfahren in einer elektrisch leitenden Probenkammer angeordnet, die sich in einer Vakuumkammer befindet, wobei die Probenkammer auf einem konstanten elektrischen Potential gehalten wird und die Analyse der abgesaugten Ionen durch Massenspektrometrie vorgenommen wird.

Aus der DE-A-39 25 891 sind eine Vorrichtung und ein Verfahren zur Charakterisierung von Materialoberflächen bekannt, bei denen im Betrieb auf einem Substrat in einem ersten Bereich eine zu untersuchende Probenoberfläche hergestellt wird und in den zweiten Bereich transportiert und dort analysiert wird.

Aus der DE-A-36 25 700 ist eine Einrichtung zur Herstellung und Analyse von Mehrkomponentenfilmen bekannt, die aus einer Kombination einer Ionenstrahl-Sputteranlage mit einer Analyse-Anlage besteht, denen ein gemeinsames Ultrahochvakuum-System zugeordnet ist. Für die Kombination der beiden Anlagen ist ein Transfermechanismus vorgesehen, bei dem sowohl die Proben als auch die Targets transportiert werden können. Zur eigentlichen Analyse ist die Einrichtung mit einem Elektronenspektrometer und mit einem Sekundärionen-Massenspektrometer versehen.

Aus der US-A-4 169 228 ist ein Röntgenfluoreszenzspektrometer für die Untersuchung schichtartiger Strukturen bekannt, bei der lediglich die oberste Schicht einer Oberfläche erfaßt werden kann, eine Aussage aber über das Tiefenprofil eines Objekts mit wachsender Entfernung von der Oberfläche in der Tiefe abnimmt und somit nur in Sonderfällen eine Bestimmung der Tiefenprofile, und das mit erheblichen Einschränkungen, möglich ist.

Die Messung von Tiefenprofilen, d.h. eine Bestimmung der Konzentration von Elementen in Abhängigkeit vom Abstand zur Oberfläche, ist eine wichtige Aufgabe in der Analytik von Oberflächen. Bisher bekannte Verfahren zur Lösung dieser Aufgabe sind beispielsweise die sogenannte X - ray photoelectron spectroscopy (XPS), die Auger electron spectroscopy (AES), die secondary ion mass spectroscopy (SIMS) und die secondary neutral mass spectroscopy (SNMS), vergl. auch "Methoden der Oberflächenanalytik" in der Zeitschrift "Vakuum in der Praxis", 1989, Nr. 4, Seiten 291 - 300.

Allen vorgenannten bekannten Verfahren zur Ermittlung von Tiefenprofilen der beschriebenen Objekte lastet der Nachteil an, daß sie sich wegen nur schwer beherrschbarer Eichprobleme schwer quantifizieren lassen, weil hohe Anforderungen an die Eichstandards zu stellen sind. Ein anderer wesentlicher Nachteil der bekannten genannten Verfahren besteht darin, daß ein verhältnismäßig hoher apparativer Aufwand erforderlich ist, zumal für die Ermittlung der Tiefenprofile in den Objekten immer Hochvakuumbedingungen nötig sind.

Es ist somit Aufgabe der vorliegenden Erfindung ein Verfahren und eine Vorrichtung zu schaffen, mit denen eine Analyse und Bestimmung der Konzentration von Elementen in vorbestimmbaren Tiefen der Objekte auf einfache Art möglich ist, wobei die bisherigen Eichprobleme bekannter Methoden vermieden werden und eine sehr gute Quantifizierkeit möglich ist.

Gelöst wird die Aufgabe gemäß dem erfindungsgemäßen Verfahren dadurch, daß
a. daß nachfolgend die abgetragenen molekularen und/oder atomaren Objektteilchen in der Dampf- oder Zerstäubungsphase auf ein Substrat überführt und in Form einer Schicht aufgebracht werden,
b. wobei das Substrat, auf dem die Schicht aufgebracht wird, relativ zu einem auf das Substrat gerichteten Strom der Objektteilchen bewegt wird, und
c. anschließend die auf dem Substrat aufgebrachte Schicht nach der Totalreflexions-Röntgenfluoreszenzanalyse Methode analysiert und/oder damit die Elementenkonzentration der Schicht ermittelt wird.

Dabei wird vorteilhafterweise das ursprünglich vertikale Konzentrationsprofil, bezogen auf die Oberfläche des Objekts, in ein laterales Konzentrationsprofil übertragen. Der wesentliche Vorteil des erfindungsgemäßen Verfahrens besteht darin, daß es möglich ist, einerseits eine im Nanometer-Bereich hervorragende Quantifizierbarkeit zu schaffen und andererseits dabei eine gute Tiefenauflösung zu ermöglichen. Zudem ist es vorteilhaft, daß diese Methode eine einfache Ausführung erlaubt und ein Hochvakuum, anders als bei den bekannten Verfahren, nicht benötigt wird.

Obwohl normalerweise spektroskopische Methoden prinzipiell nur in der Lage sind, bis zu 100 Nanometer tief unter der Oberfläche des Objekts liegende Atome mit ausreichender Sicherheit zu lokalisieren, weil die Signale der Deckschichten den Nachweis mit zunehmender Tiefe erschweren, gelingt es mit dem erfindungsgemäßen Verfahren, die Tiefenprofilmessung auch für atomare bzw. molekulare Strukturen einzusetzen, die tiefer als 100 Nanometer unter der Oberfläche des Objekts liegen.

Um die kontinuierliche Überführung der sich in der Dampf- oder Zerstäubungsphase befindenden Objektteilchen auf das Substrat auf vorbestimmbare Weise quantifiziert steuern zu können, wird die Überführung unter Einschaltung blendtechnischer Maßnahmen quantitativ gesteuert durchgeführt.

Die Vorrichtung zur Ausführung des Verfahrens ist zur Lösung der Aufgabe gekennzeichnet durch ein Mittel zur Überführung des molekularen und/oder atomaren Materials auf ein Substrat, wobei das Substrat mittels einer Einrichtung im wesentlichen quer zur Überführungswegrichtung des molekularen und/oder atomaren Materials bewegbar ist und durch eine spektroskopische Einrichtung in Form eines Totalreflexions - Röntgenfluoreszenzanalysespektrometers, in die das beschichtete Substrat zur Analyse und/oder Elementenkonzentrationsbestimmung einbringbar ist.

Der Vorteil der erfindungsgemäßen Vorrichtung besteht im wesentlichen darin, daß diese sowohl mit einer geringen Zahl an Einzelkomponenten als auch sehr einfach und damit kostengünstig bereitstellbar ist. Das hat seinen wesenlichen Grund darin, daß auf Hochvakuumeinrichtungen und dazu zwangsweise erforderliche Hochvakuumüberwachungseinrichtungen vollständig verzichtet werden kann, wobei darauf hinzuweisen ist, daß die bekannten Analyse- und Bestimmungsverfahren eben ein Hochvakuum benötigen. Als Mittel zur Überführung des molekularen und/oder atomaren Materials kann beispielsweise ein elektrisches Feld verwendet werden, das zwischen dem Objekt und dem Substrat wirkt und beispielsweise durch einfache Maßnahmen wie eine geeignete Spannungsquelle erzeugt werden kann. Zur Erreichung einer lateralen Verteilung des molekularen und/ oder atomaren Materials auf dem Substrat entsprechend dem Tiefenabtrag des Materials vom Objekt wird das Substrat mittels einer Einrichtung im wesentlichen quer zur Überführungswegrichtung des molekularen und/ oder atomaren Materials bewegbar ausgebildet, wobei die Bewegung, die in der Regel mit konstanter Geschwindigkeit erfolgt, in Abhängigkeit von der Quantität des Abtrags des Materials des Objekts gesteuert werden kann.

In den Überführungsweg des molekularen und/oder atomaren Materials auf das Substrat ist vorteilhafterweise eine einstellbare Blendeinrichtung angeordnet, mit der der Strom des molekularen und/oder atomaren Materials quantitativ und ggf. qualitativ geeignet gesteuert auf das Substrat überführt werden kann.

Der Einsatz einer spektroskopischen Einrichtung in Form eines Totalreflektions-Röntgenfluoreszenzanalysespektrometers führt zu einer hervorragenden Quantifizierbarkeit, wobei die normalerweise geringe Tiefenauflösung, die mittels eines Totalreflektions-Röntgenfluoreszenzanalysespektrometers erreicht wird, bei der erfindungsgemäßen Vorrichtung keine Rolle mehr spielt, da ein laterales Abbild eines Tiefenprofils des Objekts vorliegt und die Schichten auf dem Substrat beliebig dünn aufgebracht werden können, so daß die Beschränkung der Tiefenauflösung nicht mehr vorliegt.

Die Erfindung wird nun unter Bezugnahme auf die nachfolgenden schematischen Zeichnungen anhand eines Ausführungsbeispieles beschrieben. Darin zeigen:
- Fig. 1: die Vorrichtung zur Ausführung des Verfahrens beim Abtrag des atomaren/molekularen Materials vom Objekt und die Übertragung des Materials auf ein Substrat und
- Fig. 2: die Untersuchung des mit der Materialschicht versehenen Substrats in einem Totalreflektions-Röntgenfluoreszenzanalysespektrometer

Die Vorrichtung 10 besteht im wesentlichen aus einem Objekt 11, das analysiert werden bzw. dessen Konzentration von Elementen in vorbestimmten Tiefen bestimmt werden soll, und einer Abtrageinrichtung 12, mittels der das Material des Objekts 11 verdampft oder zerstäubt und als verdampftes oder staubförmiges Objektmaterial 13 auf ein Substrat 15 überführt wird. Als Abtrageinrichtung 12 eignen sich beliebige geeignete Zerstäubungs- oder Verdampfungseinrichtungen, wie sie beispielsweise durch sogenannte Sputter-Einrichtungen oder Einrichtungen zum Abtrag von Material mittels einer Lichtbogenentladung bekannt sind. Grundsätzlich sind zum erfindungsgemäßen Abtrag des Objektmaterials 13 neben physikalischen auch chemische Einrichtungen bzw. Verfahren möglich. Da diese Abtrageinrichtungen 12 und die damit ausführbaren Verfahren grundsätzlich aber im Stand der Technik bekannt sind, wird an dieser Stelle nicht weiter darauf eingegangen.

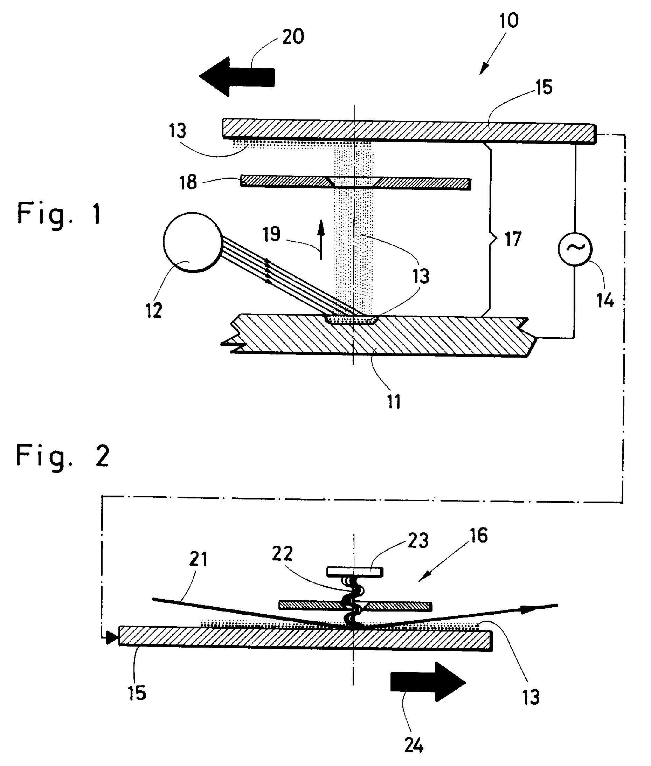

Die Überführung des Objektmaterials 13 vom Objekt 11, nachdem es verdampft oder zerstäubt worden ist, auf das Substrat 15 erfolgt mittels geeigneter Überführungsmittel 14, die ebenfalls grundsätzlich im Stand der Technik bekannt sind. Ein Überführungsmittel 14, beispielsweise ein mittels eines elektrischen Feldes ausgeführtes Überführungsmittel 14, kann beispielsweise eine Spannungsquelle sein, was symbolisch in Fig. 1 dargestellt ist. Mittels eines elektrischen Feldes zwischen dem Objekt 11 und dem Substrat 15 kann somit dafür gesorgt werden, daß das verdampfte bzw. zerstäubte Objektmaterial 13, den Überführungsweg 17 in Überführungswegrichtung 19 durchlaufend, erreicht.

In den Überführungsweg 19 kann eine Blendeinrichtung 18 angeordnet sein, die zur quantitativen und/oder ggf. auch nur qualitativen Steuerung des Objektmaterialauftrags auf dem Substrat 15 benutzt werden kann.

Wie aus Fig. 1 ersichtlich ist, kann entsprechend dem Pfeil 20 das Substrat 15 durch hier nicht gezeigte gesonderte Bewegungseinrichtungen während der Phase der Überführung des Objektmaterials 13 bewegt werden, so daß sich ein laterales Abbild durch die sich somit auf dem Substrat 15 bildende Schicht des Materials des Objekts 11 entsprechend dem Tiefenprofil des Objekts 11 ergibt.

Grundsätzlich ist die Länge des Substrats 15 nicht begrenzt, so daß sich in Abhängigkeit von seiner Länge und der Geschwindigkeit in Richtung des Pfeiles 20 eine nahezu beliebige Auflösung bei der Analyse des Objektmaterials 13 ergibt und auch eine extrem hohe Quantifizierbarkeit möglich ist.

Der eigentliche Analyse- bzw. Vorgang zur Bestimmung der Konzentration des Objektmaterials 13 findet gemäß Fig. 2 im Zusammenwirken mit einer spektroskopischen Einrichtung 16, die hier ein Totalreflektions-Röntgenfluoreszenzspektrometer ist, statt. Obwohl grundsätzlich der Aufbau und die Wirkungsweise eines Totalreflektions-Röntgenfluoreszenzspektrometers bekannt ist, sei kurz auf dieses zum besseren Verständnis eingegangen. Entsprechend der strichpunktierten Linie von Fig. 1 nach Fig. 2 wird das Substrat 15 in das Totalreflektions-Röntgenfluoreszenzanalysespektrometer 16 gebracht, wobei die das Objektmaterial 13 auf den Substrat mittels einer von einer hier nicht dargestellten Röntgenstrahlungsquelle herrührenden Primärstrahlung 21 beaufschlagt wird, und zwar unter Totalreflektionsbedingungen. Die sich infolgedessen ausbildende Fluoreszenzstrahlung 22 fällt dabei auf einen Röntgendetektor 23, der die laterale Verteilung der Fluoreszenzstrahlung 22 der Schicht des Objektmaterials 13 mißt, wobei während des Meßvorganges das Substrat 15 entsprechend seiner Bewegung in Richtung des Pfeiles 24 abläuft.

Zusammenfassend kann festgestellt werden, daß der Vorteil des erfindungsgemäßen Verfahrens sowie der Vorrichtung 10 im wesentlichen darin zu sehen ist, daß normalerweise sehr schwer ermittelbare Vertikalprofile von Objekten 11 in leichte bestimmbare laterale Verteilungen transformiert werden. Ursprünglich gekrümmte und/oder rauhe Oberflächen von Objekten 11 werden in einen idealen Zustand zur Messung bzw. Bestimmung in einen glatten und ebenen überführt. Außerdem kann die Zusammensetzung des Substrats 15 so gewählt werden, das es - im Gegensatz zu den Schichten der ursprünglichen Probe - frei von Elementen der zu analysierenden Oberflächenschicht ist. Dadurch kann die Spezifität und Tiefenauflösung von Tiefenprofilmessungen noch weiter verbessert werden.

### Bezugszeichenliste

- 10: Vorrichtung
- 11: Objekt
- 12: Abtrageinrichtung
- 13: Objektmaterial
- 14: Überführungsmittel
- 15: Substrat
- 15: spektroskopische Einrichtung
- 17: Überführungsweg
- 18: Blendeinrichtung
- 19: Überführungswegrichtung
- 20: Pfeil
- 21: Primärstrahlen
- 22: Fluoreszenzstrahlen
- 23: Röntgendetektor
- 24: Pfeil

## Patentansprüche

1. Verfahren zur Analyse und Bestimmung der Konzentration von Elementen in vorbestimmten Tiefen von im wesentlichen ebenen Objekten mit geringer Rauhigkeit mittels spektroskopischer Methoden, wobei das Objekt äußerlich unter Anwendung eines Zerstäubungs- oder Verdampfungsverfahrens abgetragen wird, dadurch gekennzeichnet, daß
a. nachfolgend die abgetragenen molekularen und/oder atomaren Objektteilchen in der Dampf- oder Zerstäubungsphase auf ein Substrat überführt werden und in Form einer Schicht aufgebracht werden,
b. wobei das Substrat, auf dem die Schicht aufgebracht wird, relativ zu einem auf das Substrat gerichteten Strom der Objektteilchen bewegt wird, und
c. anschließend die auf dem Substrat aufgebrachte Schicht nach der Totalreflexions Röntgenfluoreszenzanalysemethode analysiert und/oder damit die Elementenkonzentration der Schicht ermittelt wird.

2. Verfahren nach Anspruch 1, dadurch gekennzeichnet, daß die Überführung der sich in der Dampf- oder Zerstäubungsphase befindenden Objektteilchen auf das Substrat unter Einschaltung blendtechnischer Maßnahmen quantitativ gesteuert erfolgt.

3. Vorrichtung zur Analyse der Konzentration von Elementen in vorbestimmten Tiefen von im wesentlichen ebenen Objekten mit geringer Rauhigkeit mittels einer spektroskopischen Einrichtung, umfassend eine Einrichtung zum physikalischen und/oder chemischen Abtrag des Objektmaterials, zur Ausführung des Verfahrens nach Anspruch 1, gekennzeichnet durch Mittel (14) zur Überführung des molekularen und/oder atomaren Materials auf ein Substrat , wobei das Substrat (15) mittels einer Einrichtung im wesentlichen quer zur Überführungswegrichtung (19) des molekularen und/oder atomaren Materials (13) bewegbar ist und durch eine spektroskopische Einrichtung (16) in Form eines Totalreflexions-Röntgenfluoreszenzanalysespektrometers, in die das beschichtete Substrat (15) zur Analyse und/oder Elementenkonzentrationsbestimmung einbringbar ist.

4. Vorrichtung nach Anspruch 3, dadurch gekennzeichnet, daß in dem Überführungsweg (17) des molekularen und/oder atomaren Materials (13) auf das Substrat (15) eine einstellbare Blendeinrichtung (18) angeordnet ist.

## Claims

1. Process for the analysis and determination of the concentration of elements at predetermined depths in sustantially planar objects with low roughness by means of spectroscopic methods, whereby the object is stripped externally using a nebulization or vaporization process. characterized in that
a. the removed molecular and/or atomic object particles in the vaporization or nebulization phase are transferred to a substrate and are applied in the form of a coating,
b. whereby the substrate upon which the coating is applied is moved relative to a stream of the object particles directed onto the substrate, and
c. the coating applied to the substrate is subsequently analyzed using the total reflexion Röntgen fluorescence analysis method and/or the elemental concentration of the coating is thus determined.

2. Process according to Claim 1, characterized in that. the transfer of the object particles in the vaporization or nebulization phase onto the substrate is quantitatively regulated by the incorporation of aperture control technology.

3. Device for the analysis of the concentration of elements at predetermined depths of substantially planar objects with low roughness by means of spectroscopic equipment, comprising equipment for physically and/or chemically stripping the object material in order to carry out the process according to Claim 1, characterized by the means (14) of transferring the molecular and/or atomic material onto a substrate, whereby equipment is provided for moving the substrate (15) substantially perpendicular to the transfer path direction (19) of the molecular and/or atomic material (13) and by spectroscopic equipment (16) in the form of a total reflexion Röntgen fluorescence analysis spectrometer, into which the coated substrate (15) may be inserted for analysis and/or determination of elemental concentration.

4. Device according to Claim 3, characterized in that adjustable aperture equipment (18) is positioned in the transfer path (17) of the molecular and/or atomic material (13) onto the substrate (15).

## Revendications

1. Procédé pour analyser et déterminer la concentration d'éléments à des profondeurs prédéterminées d'objets essentiellement plats possédant une faible rugosité, à l'aide de procédés spectroscopiques, selon lequel un enlèvement du matériau de l'objet s'effectue extérieurement moyennant l'utilisation d'un procédé de pulvérisation ou d'évaporation, caractérisé en ce que
a. on transfère ensuite sur un substrat les particules moléculaires et/ou atomiques enlevées de l'objet, dans la phase d'évaporation ou de pulvérisation et on les dépose sous la forme d'une couche;
b. le substrat, sur lequel la couche est déposée, étant déplacé par rapport à un flux, dirigé vers le substrat, des particules de l'objet, et
c. on analyse ensuite la couche déposée sur le substrat selon le procédé d'analyse à fluorescence X à réflexion totale et/ou on détermine la concentration des éléments de la couche.

2. Procédé selon la revendication 1, caractérisé en ce que le transfert des particules de l'objet, situé dans la phase d'évaporation ou de pulvérisation, sur le substrat s'effectue d'une manière commandée quantitativement par la mise en place de dispositions techniques utilisant un diaphragme.

3. Dispositif pour analyser la concentration d'éléments à des profondeurs prédéterminées d'objets essentiellement plats possédant une faible rugosité à l'aide d'un dispositif spectroscopique, comprenant un dispositif pour réaliser l'enlèvement physique et/ou chimique du matériau de l'objet, pour la mise en oeuvre du procédé selon la revendication 1, caractérisé par des moyens (14) pour transférer le matériau moléculaire et/ou atomique sur un substrat, le substrat (15) étant déplaçable à l'aide d'un dispositif essentiellement transversalement par rapport à la direction du trajet de transfert (19) du matériau moléculaire et/ou atomique (13), et par un dispositif spectroscopique (16) se présentant sous la forme d'un spectromètre d'analyse à fluorescence X à réflexion totale, dans lequel le substrat (15) recouvert d'une couche peut être introduit pour l'analyse et/ou la détermination de la concentration des éléments.

4. Dispositif selon la revendication 3, caractérisé en ce qu'un dispositif formant diaphragme réglable (18) est disposé sur le trajet de transfert (17) du matériau moléculaire et/ou atomique (13) au substrat (15).
